# EUROPEAN PATENT APPLICATION

(11) **EP 2 902 269 A1**
(43) Date of publication of application: **05.08.2015**
(21) Application number: 12885903.0
(22) Date of filing: 28.09.2012
(51) Int. Cl.: B60R 19/30, B63B 59/02, E01F 15/00, E02B 3/26

(54) **IMPACT RELIEVING DEVICE**

(30) Priority: 26.09.2012 CN 201210366589
(71) Applicant: Tongxiang Small Boss Special Plastic Products Co. Ltd., Tongxiang, Zhejiang 314514 (CN)
(72) Inventor: SHEN, Jianqing, Tongxiang Zhejiang 314514 (CN)
(74) Representative: Isarpatent
(86) International application number: PCT/CN2012/082317
(87) International publication number: WO 2014/047880

(57) **Abstract**

The invention discloses a device to reduce the collision force comprising a collisional part (1) and a fixed part (2). The device to reduce the collision force is an integral structure of integrated molding production. The collisional part (1) includes an inner layer (3) and an outer layer (4). A cavity (6) is formed by means of the segmentation of a separated reinforcement (5) between the inner layer (3) and the outer layer (4). The outer layer (4) of the collisional part is in arc shape and a curved surface bulges outward. To compared with the prior art, the device to reduce the collision force according to the present invention has a low cost, easy manufacture and installation, and simple structure. In particular, it could effectively reduce the crash impact. It could reduce the damage to the vehicles or ships or other machine equipments using the described device in the present invention and the staff's safety.

## Description

### Field of the Invention

The present invention relates to a device to reduce the collision force, in particular a device to reduce the collision force to be used for ships and vehicles. For example, the device is used for a bumper of the vehicle or a fender beam of the ship. It can also be applied to other places which need to prevent the collision force, such as a highway crash barrier or a port terminal guardrail and so on.

### Background to the Invention

It is easy to collide in the process of using ships and vehicles. When a collision occurs, it may bring about the serious accidents which cause casualties and property losses due to the unreasonable settings of the protective devices of ships and vehicles' outsides or without the protective devices.

The 2011 China's industrial economic operation of the announcement released by the ministry of industry and information technology shows that china's auto market grows steadily. The automobile production is both more than 18.4 million vehicles and refreshes the world record. According to the china association of automobile manufactures, 2011 in china the car cumulative production is 18.4189 million and year-on-year growth of 0.8%. The car sale is 18.5051 million and year-on-year growth of 2.5%. In 2011 according to data, after strictly forbidden to drunk driving, the car ownership is by 104 million. There are 62000 people died in the accident. According to 2012 national conference on transportation, in 2011 there are 298 transport vessel traffic accidents, and 291 people death and missing, 2150 search and rescue ship in distress, 18712 rescue personnel people, and 96.7% of the rescue success rate. It can be seen from the above data that the accident's incidence is very frequent. Because the protection device is not effective, the phenomenon of car crash often occurs. Now the most common method is a protective ring which is setting around the lateral margin or an insurance rack around the outer margin. Then a rubber layer is set on an insurance shelf. But the protection devices of two methods of the prior art are made of rubber or soft plastic which are coated on the hull's outer side. The impact could be reduced to a certain extent. But this reduction degree is lower and the effect is minimal.

China utility model patent No.ZL01217833.0 provides a safety buffer body in ship collision. The section of the buffer body subject is separately semicircle, round ring or trapezoid. There are mounting holes on the subject and the mounting holes are through from the subject's head face to the end face. The ribbon reflective paint of yellow and white is coated on the subject's faces. The paint is fixed on a hull through a screw. This kind of safety buffer body in ship collision is only set on the specific location. If the buffer bodies are installed around the hull, there is a high cost and blocking the hull's speed.

China invention patent application No.CN93111409.8 provides a kind of buffer method and device in ship collision. A flexible buffer device in ship collision is installed around a hull. It is connected with an automatic opening and closing door on the hull and is flexible or angle transformation. This kind of device could use a single form or a multiple combination forms of hydraulic, pneumatic, spring and machinery. But the operation of this device and method is complicated and there is a high cost. In the case of early warning it could reduce the impact. But it does not work when meeting a sudden collision.

British invention patent No.GB99815571.3 provides a collision-resistant double layer structure, such as a double hull side, including an external shell and an internal shell. A set is made from expansive materials. A channel is equipped with depending on each other or is stacked up and down. The channel is fixed to an inner surface of the external structure shell by their side's end. Each base of the channel at least is connected with the internal structure shell by a basically perpendicular to the base's girder or with a structure thereof. This collision-resistant device's structure is complex with a long production time and a complex processing.

### Summary of the Invention

In order to overcome the defects in the prior art, the present invention provides a device to reduce the collision force which could effectively reduce and diffuse the collision impact in a vehicle or a hull. The device has the advantages of simple manufacturing, reasonable structure, low cost and could effectively reduce the collision impact.

In accordance with the present invention, there is provided a device to reduce the collision force comprising: a collisional part (1) and a fixed part (2); wherein the device to reduce the collision force is an integral structure of integrated molding; and the collisional part (1) includes an inner layer (3) and an outer layer (4); and a cavity (6) is formed by means of the segmentation of a separated reinforcement (5) between the inner layer (3) and the outer layer (4); and the outer layer (4) of the collisional part is in arc shape and a curved surface bulges outward.

Preferably, the fixed part (2) and an inside wall of the collisional part (1) form a fixed slot (10); and the fixed slot (10) is located on the top of the device to reduce the collision force.

Preferably, a prominent block or a groove is equipped on the inside wall of the inner layer (3) of the collisional part (1); and a groove or a prominent block which is fitted together with the prominent block or the groove of the inner layer is equipped on a vehicle or a hull; the prominent block or the groove of the collisional part (1) maintains a constant connection with the groove or the prominent block of the vehicle or the hull.

Preferably, an insert block is respectively equipped on the both ends of the cavity (6); and an interference fit is between the insert block and the cavity (6).

Preferably, an outer layer of two adjacent cavities (6) is the outer layer (4) of the collisional part (1).

Preferably, a groove is equipped between the outer layer of the two adjacent cavities (6) to separate the cavities; and an outer layer of the two adjacent grooves is in arc shape and the curved surface bulges outward.

Preferably, a wall of the inner layer (3) of the collisional part (1) which contacted with the vehicle or the hull is plane.

Preferably, the wall is made up of multiple planes and the relative position between the planes gradually increases or decreases from top to bottom.

Preferably, the relative position between the planes is not in the same plane.

Preferably, a tail which contracts inward is equipped on the bottom of the collisional part (1); and there is a certain angle between the tail and the collisional part and the angle is between 60-150 degrees.

Preferably, a location hole (8) is equipped on the separated reinforcement (5) between the inner layer (3) and the outer layer (4) of the collisional part (1); and the axis of the location hole (8) and the axis of the cavity (6) are parallel to each other.

Preferably, a through hole (9) is equipped on the fixed part (2); and the axis of the through hole (9) and the axis of the cavity (6) are parallel to each other.

Preferably, a trend of the cavity (6) is the same with a trend of fixed slot (10).

Preferably, the device to reduce the collision force is made of flexible plastics.

Preferably, the device to reduce the collision force is made of rubber.

To compared with the prior art, the device to reduce the collision force according to the present invention has a low cost, easy manufacture and installation, and simple structure. In particular, it could effectively reduce the crash impact. It could reduce the damage to the vehicles or ships or other machine equipments using the described device in the present invention and the staff's safety.

### Brief Description of the Drawings

Figure 1 is a three-dimensional structure view of a preferred embodiment of the device to reduce the collision force in accordance with the present invention;
Figure 2 is the front view of the device of Figure 1;
Figure 3 is the top view of the device of Figure 1.

### Detailed Description of Preferred Embodiments

The invention will now be described, by way of example, with reference to the following drawings in which.

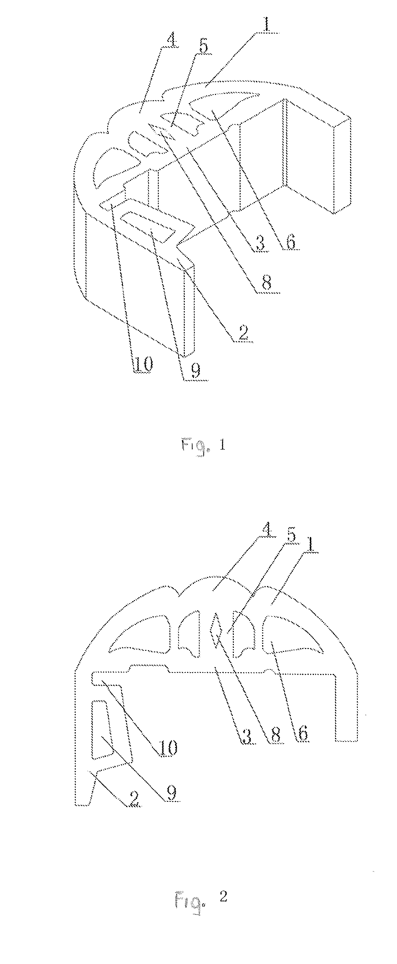

Referring to Figures 1 to 2, in accordance with an embodiment of the present invention, there is provided a device to reduce the collision force comprising a collisional part 1 and a fixed part 2. The device to reduce the collision force is an integral structure of integrated molding production. Preferably, the device to reduce the collision force is made of flexible plastics or rubber. When the device is made of the above described materials, it is to a large extent to reduce the collision force when the device is conflicted. The larger restoring force is formed and it has scored remarkable effects. The collisional part 1 includes an inner layer 3 and an outer layer 4. A cavity 6 is formed by means of the segmentation of a separated reinforcement 5 between the inner layer 3 and the outer layer 4. The outer layer 4 of the collisional part is in arc shape and a curved surface bulges outward. The fixed part 2 and an inside wall of the collisional part 1 form a fixed slot 10. The fixed slot 10 is located at the top of the device to reduce the collision force.

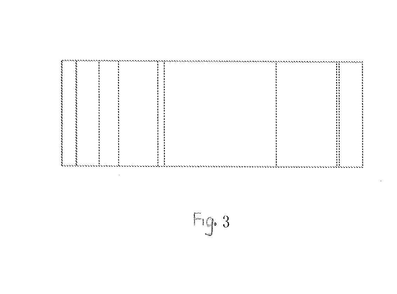

Referring to Figures 2 to 3, a prominent block or a groove is equipped on the inside wall of the inner layer 3 of the collisional part 1. A groove or a prominent block which is fitted together with the prominent block or the groove of the inner layer is equipped on a vehicle or a hull , the prominent block or the groove of the collisional part 1 maintains a constant connection with the groove or the prominent block of the vehicle or the hull. An insert block is respectively equipped on the both ends of the cavity 6 and an interference fit is between the insert block and the cavity 6. The outer layer 4 of the collisional part is in arc shape and a curved surface bulges outward.

An outer layer of the two adjacent cavities 6 is the outer layer 4 of the collisional part 1. A groove is equipped between the outer layer of the two adjacent cavities 6 to separate the cavities and an outer layer of the two adjacent grooves is in arc shape and the curved surface bulges outward. A wall of the inner layer 3 of the collisional part 1 which is contacted with the vehicle or the hull is plane. The wall is made up of multiple planes and the relative position between the planes gradually increases or decreases from top to bottom. The relative position between the planes is not in the same plane. A tail which contracts inward is equipped on the bottom of the collisional part 1 and there is a certain angle between the tail and the collisional part and the angle is 90 degree. According to the different applications of the device to reduce the collision force, the angel is between 60-150 degrees. A location hole 8 is equipped on the separated reinforcement 5 between the inner layer 3 and the outer layer 4 of the collisional part 1 and the axis of the location hole 8 and the axis of the cavity 6 are parallel to each other. A through hole 9 is equipped on the fixed part 2 and the axis of the through hole 9 and the axis of the cavity 6 are parallel to each other. A trend of the cavity 6 is the same with a trend of fixed slot 10.

It will be readily apparent to persons skilled in the relevant arts that various modifications and improvements may be made to the foregoing embodiments, in addition to those already described, without departing from the basic inventive concepts of the present invention.

## Claims

1. A device to reduce the collision force comprising: a collisional part (1) and a fixed part (2); wherein the device to reduce the collision force is an integral structure of integrated molding production; and the collisional part (1) includes an inner layer (3) and an outer layer (4); and a cavity (6) is formed by means of the segmentation of a separated reinforcement (5) between the inner layer (3) and the outer layer (4); and the outer layer (4) of the collisional part is in arc shape and a curved surface bulges outward.

2. A device to reduce the collision force in accordance with claim 1, wherein the fixed part (2) and an inside wall of the collisional part (1) form a fixed slot (10); and the fixed slot (10) is located on the top of the device to reduce the collision force.

3. A device to reduce the collision force in accordance with claim 1, wherein a prominent block or a groove is equipped on the inside wall of the inner layer (3) of the collisional part (1); and a groove or a prominent block which is fitted together with the prominent block or the groove of the inner layer is equipped on a vehicle or a hull; the prominent block or the groove of the collisional part (1) maintains a constant connection with the groove or the prominent block of the vehicle or the hull.

4. A device to reduce the collision force in accordance with claim 1, wherein an insert block is respectively equipped on the both ends of the cavity (6); and an interference fit is between the insert block and the cavity (6)

5. A device to reduce the collision force in accordance with claim 1 or claim 4, wherein an outer layer of the two adjacent cavities (6) is the outer layer (4) of the collisional part (1).

6. A device to reduce the collision force in accordance with claim 5, wherein a groove is equipped between the outer layer of the two adjacent cavities (6) to separate the cavities; and an outer layer of the two adjacent grooves is in arc shape and the curved surface bulges outward.

7. A device to reduce the collision force in accordance with claim 1 or claim 3, wherein a wall of the inner layer (3) of the collisional part (1) which is contacted with the vehicle or the hull is plane.

8. A device to reduce the collision force in accordance with claim 7, wherein the wall is made up of multiple planes and the relative position between the planes gradually increases or decreases from top to bottom.

9. A device to reduce the collision force in accordance with claim 8, wherein the relative position between the planes is not in the same plane.

10. A device to reduce the collision force in accordance with claim 1, wherein a tail which contracts inward is equipped on the bottom of the collisional part (1); and there is a certain angle between the tail and the collisional part and the angle is between 60-150 degrees.

11. A device to reduce the collision force in accordance with claim 1 or claim 10, wherein a location hole (8) is equipped on the separated reinforcement (5) between the inner layer (3) and the outer layer (4) of the collisional part (1); and the axis of the location hole (8) and the axis of the cavity (6) are parallel to each other.

12. A device to reduce the collision force in accordance with claim 1, wherein a through hole (9) is equipped on the fixed part (2); and the axis of the through hole (9) and the axis of the cavity (6) are parallel to each other.

13. A device to reduce the collision force in accordance with claim 1 or claim 12, wherein a trend of the cavity (6) is the same with a trend of fixed slot (10).

14. A device to reduce the collision force in accordance with claim 1, wherein the device to reduce the collision force is made of flexible plastics.

15. A device to reduce the collision force in accordance with claim 1, wherein the device to reduce the collision force is made of rubber.
